# FASCICULE DE BREVET EUROPEEN

(11) **EP 2 574 503 B1**
(45) Date de publication et mention de la délivrance du brevet: **23.03.2022**
(21) Numéro de dépôt: 12185641.3
(22) Date de dépôt: 24.09.2012
(51) Int. Cl.: F21S 41/19, F21S 41/39, F21S 43/14, F21V 19/04, B60Q 1/26

(54) **Module de projecteur de véhicule avec fixation a baionnette, support et projecteur correspondant**
Scheinwerfermodul eines Kraftfahrzeugs mit Bajonettverschluss, Halterung und entsprechender Scheinwerfer
Motor vehicle headlamp module with bayonet attachment, corresponding mounting and headlamp

(30) Priorité: 27.09.2011 FR 1158618
(43) Date de publication de la demande: 03.04.2013
(73) Titulaire: VALEO VISION, 93012 Bobigny Cedex (FR)
(72) Inventeur: Moisy, Eric, 23009 Jaean (ES); Le Bars, Jean-François, 89275 Elchingen (DE)
(74) Mandataire: Valeo Visibility

(56) Documents cités:
- EP-A1- 1 767 399
- EP-A1- 1 901 001
- EP-A1- 2 039 992
- EP-A2- 2 194 311
- WO-A1-2006/066530
- WO-A1-2010/146509
- WO-A2-03/066374
- US-A1- 2009 296 416

## Description

L'invention a trait à un module d'éclairage et/ou de signalisation notamment pour véhicule. L'invention a trait également à un support de module d'éclairage et/ou de signalisation ainsi qu'à un dispositif d'éclairage et/ou de signalisation comprenant ledit module et/ou ledit support.

L'utilisation de sources lumineuse du type diode à électroluminescence (LED) est de plus en plus courante dans les projecteurs et les feux de signalisation de véhicules automobiles. Les LEDs ont une durée de vie sensiblement plus longue que les lampes à incandescence, à savoir une durée de vie courante supérieure à 10.000 heures, allant même jusqu'à 35.000 et même 50.000 heures, soit nettement plus que la durée de vie d'un véhicule automobile. La durée de vie d'une LED est cependant liée à ses conditions de fonctionnement, à savoir sa température de fonctionnement, le courant la traversant. Ces conditions de fonctionnement sont généralement maitrisées si bien que les LEDs implantées dans des projecteurs et dispositifs de signalisation de véhicule gardent une durée de vie en principe supérieure à la durée de vie du véhicule et ne sont par conséquent généralement pas démontable ou remplaçables.

Il n'en est pas même pour les projecteurs et dispositifs de signalisation de véhicule à lampes classiques à incandescence qui doivent pouvoir être remplacées facilement. La réglementation notamment européenne relative à l'éclairage et la signalisation des véhicules impose par ailleurs depuis récemment que l'utilisateur du véhicule puisse accéder aux lampes classiques en vue de leur remplacement.

La durée de vie des LEDs embarquées dans des projecteurs et dispositifs de signalisation de véhicule peut également être influencée, plus particulièrement raccourcie, en fonction de divers paramètres liés essentiellement à l'environnement direct. Compte tenu du caractère récent de l'utilisation de LEDs pour l'éclairage et la signalisation des véhicules, il n'existe à l'heure actuelle que très peu d'expérience quant à la tenue des LEDs à long terme dans ces conditions de fonctionnement. Or tous s'accordent à ce que des défauts risquent d'apparaître avec le temps et que des remplacements de LEDs pourront s'avérer nécessaire.

Le document de brevet WO 2006/066531 A1 divulgue un module de source lumineuse du type LED à montage rapide. Outre une ou plusieurs sources lumineuses du type LED, ce module comprend un radiateur de refroidissement de la ou des sources lumineuses ainsi qu'un dispositif de fixation rapide du type baïonnette. Cet enseignement est intéressant d'un point de vue facilité de montage, notamment du fait que l'ensemble source(s) lumineuse et radiateur correspondant peut être rapidement et facilement remplacé. Le remplacement d'une ou plusieurs sources lumineuses d'un module d'éclairage et/ou de signalisation, en particulier d'un projecteur, est cependant source de déréglage du faisceau. Ceci est particulièrement vrai pour les projecteurs à LEDs avec coupure du faisceau. En effet, la position de la source lumineuse a une influence directe sur la coupure. La solution proposée par ce document ne permet par conséquent pas à l'utilisateur du véhicule de remplacer la source lumineuse dans la mesure où un réglage minutieux sera ensuite nécessaire. Un tel réglage n'est pas à la portée d'un service d'entretien courant de véhicule. Un démontage du projecteur du véhicule sera par conséquent nécessaire.

Le document de brevet FR 2 917 348 A1 divulgue un dispositif d'éclairage et/ou de signalisation pour véhicule automobile où la source lumineuse est portée par un support amovible par rapport au boîtier du dispositif. Plus précisément, la glace du dispositif comprend une ouverture au travers de laquelle la source lumineuse et son support sont disposés. La source lumineuse éclaire essentiellement dans une direction opposée à la direction d'éclairage et/ou de signalisation du dispositif, un réflecteur du type parabolique étant disposé dans le boîtier en face de la source lumineuse de manière à réfléchir les rayons émis par la source selon la direction principale d'éclairage et/ou de signalisation du dispositif. L'accès à la source lumineuse a lieu depuis l'extérieur du dispositif et du véhicule. Cette disposition présente l'avantage de ne pas requérir la présence d'un espace vide pour le passage de la main d'un intervenant ou d'un outil utilisé par celui-ci à l'occasion d'un remplacement de la source lumineuse. Ce montage est cependant essentiellement limité aux sources lumineuses du type à incandescence. En effet, les sources lumineuses du type LED sont disposées sur un circuit imprimé (PCB pour « printed circuit board ») équipé d'un radiateur de refroidissement de la ou des LEDs. Le montage prévu dans cet enseignement est difficilement applicable à une source lumineuse du type LED en raison de l'encombrement de ces composants.

Le document de brevet FR 2 727 190 A1 divulgue un projecteur pour véhicule automobile, où le boîtier comprend un couvercle arrière monté pivotant sur le boîtier. L'ouverture du boîtier par pivotement du couvercle donne un accès à la source lumineuse principale. Le couvercle supporte par ailleurs une source lumineuse supplémentaire assurant la fonction feu de position. La solution technique divulguée dans ce document est intéressante d'un point de vue facilité de remplacement des sources lumineuses mais est difficilement applicable à des sources lumineuses du type LED.

De manière générale, il est à noter que l'architecture des sources lumineuses du type LED est radicalement différente de celle des sources lumineuses à incandescence. Comme déjà mentionné, les LEDs sont habituellement disposées directement sur un platine (PCB) qui est pourvue d'un ou plusieurs radiateurs de refroidissement de la ou des LEDs. Cet agencement confère à la LED et ses équipements un certain encombrement. De plus, certains projecteurs ou feux arrières peuvent présenter des agencements de LEDs leur conférant un caractère individuel ou encore une « signature ». Le remplacement d'une ou plusieurs des LEDs d'un tel dispositif d'éclairage peut nécessiter la dépose du dispositif en vue d'une intervention en atelier spécialisé.

L'invention a pour objectif de proposer une solution palliant au moins un des inconvénients sus mentionnés. Plus particulièrement, l'invention a pour objectif de proposer une solution apte à faciliter le remplacement de sources lumineuses notamment du type LED de projecteurs et de feux de signalisation de véhicule. L'invention a pour objet un module d'éclairage et/ou de signalisation notamment pour véhicule, comprenant les caractéristiques de la revendication 1.

Dans un mode de réalisation de l'invention, le module d'éclairage et/ou de signalisation réalise seul le faisceau d'éclairage et/ou de signalisation, ce faisceau présentant une photométrie prédéterminée.

Préférentiellement, la ou les sources lumineuses sont du type LED. Préférentiellement, le module comprend également au moins un radiateur de refroidissement de la ou des sources lumineuses et/ou des moyens électroniques de contrôle et/ou régulation du courant parcourant la ou les sources lumineuses. Toujours préférentiellement, le module comprend une platine supportant la ou les sources lumineuses du type LED.

Selon un mode avantageux de l'invention, les moyens de fixation rapide sont au moins majoritairement disposés à la périphérie du module.

Selon l'invention, les moyens de fixation sont disposés longitudinalement selon l'axe optique du module entre les deux extrémités longitudinales dudit module.

Selon l'invention, le module s'étend longitudinalement selon son axe optique.

Selon un encore autre mode avantageux de l'invention, les moyens de fixation sont configurés de manière à permettre la mise en place du module par un déplacement selon une direction correspondant essentiellement à celle de l'axe optique du module.

Selon un encore autre mode avantageux de l'invention, le déplacement de mise en place du module comprend un mouvement de basculement par rapport à une direction transversale, le mouvement de basculement ayant lieu préférentiellement après le mouvement de translation.

Selon un encore autre mode avantageux de l'invention, les moyens de fixation rapide sont du type à rotation autour d'un axe parallèle ou confondu avec l'axe optique du module, préférentiellement à baïonnette, et les moyens de fixation rapide comprenant préférentiellement une bride de montage.

Selon un encore autre mode avantageux de l'invention, les moyens de fixation rapide comprennent des moyens de blocage en rotation configurés pour empêcher une désolidarisation du module, les moyens de blocage comprenant préférentiellement une encoche à la périphérie de la bride.

Selon l'invention, la ou au moins une des surfaces réfléchissantes est de profil elliptique avec un premier foyer occupé par la source ou au moins une des sources lumineuse et un second foyer, les moyens de fixation rapide étant positionnés longitudinalement selon l'axe optique du module entre le second foyer et l'extrémité avant du module, préférentiellement à hauteur du second foyer.

Selon l'invention, le module comprend une lentille de projection du faisceau d'éclairage, les moyens de fixation rapide étant positionnés selon l'axe optique du module entre le second foyer et ladite lentille.

Selon l'invention, le module comprend des moyens de préhension disposés à l'extrémité arrière du module, préférentiellement sur un radiateur de refroidissement de la ou d'au moins une des sources lumineuses, lesdits moyens étant parmi les suivants : une face arrière présentant dans une coupe longitudinale un profil avec une partie en saillie adaptée à une préhension manuelle, une face arrière présentant des faces latérales généralement parallèles adaptées à une préhension manuelle, une face arrière présentant au moins deux orifice(s) et/ou encoche(s) aptes à recevoir des tiges d'un outil de préhension distinct L'invention a également pour objet un dispositif d'éclairage et/ou de signalisation notamment pour véhicule, comprenant un module d'éclairage et/ou de signalisation et un support dudit module, dans lequel le module est conforme à l'une des revendications 1 à 7.

Selon un mode avantageux de l'invention, le support comprend des moyens de fixation rapide destinés à coopérer avec des moyens de fixation rapide correspondants dudit module.

Selon un mode avantageux de l'invention, le support comprend un orifice destiné à recevoir le module et une surface de montage du module.

Selon un autre mode avantageux de l'invention, le support comprend à la périphérie de l'orifice des moyens de blocage en rotation du module, les dits moyens étant apte à coopérer avec une encoche à la périphérie des moyens de fixation du module. Selon un encore autre mode avantageux de l'invention, les moyens de blocage comprennent un élément mobile radialement par rapport à l'orifice et/ou un élément mobile en rotation configuré de manière à agir à la manière d'un cliquet.

Les mesures techniques de l'invention qui viennent d'être décrites permettent un remplacement aisé de la ou des sources lumineuses sans pour autant dérégler le faisceau d'éclairage ou de signalisation. En effet, le fait de remplacer le module complet permet de remplacer les éléments optiques essentiels du dispositif d'éclairage et/ou de signalisation. Ces éléments sont préréglés dans le module ; son remplacement permet par conséquent d'éviter une perte de qualité potentiellement importante du faisceau d'éclairage et/ou de signalisation. Cette facilité d'enlèvement du module notamment en cas de défaillance d'une ou plusieurs des sources lumineuses LED permet de remplacer les LEDs et leur support par de nouveaux modèles de LEDs potentiellement plus performantes. En effet, compte tenu de l'évolution des LEDs, de nouveaux modèles vont remplacer les anciens. Le fait de pouvoir remplacer tout le module va permettre de s'affranchir des modèles obsolètes de LEDs et de prévoir des modules de remplacement avec des LEDs de technologie plus récente et plus courante. Cette solution va donc permettre une standardisation des LEDs et, partant, une réduction de coûts.

D'autres caractéristiques et avantages de la présente invention seront mieux compris à l'aide de la description et des dessins parmi lesquels :
- La figure 1 est une vue en perspective d'un module d'éclairage et de son support, selon un premier mode de réalisation de l'invention ;
- La figure 2 est une vue en perspective selon un autre angle du module d'éclairage de la figure 1 ;
- La figure 3 est une vue en perspective d'une variante du support de module d'éclairage de la figure 1 ;
- La figure 4 est une vue de côté du module d'éclairage de la figure 1 illustrant les zones de positionnement des moyens de fixation à baïonnette qui sont illustrés par une vue de face ;
- La figure 5 est une vue en perspective d'un module d'éclairage selon un deuxième mode de réalisation, la figure 5 illustrant un premier exemple de moyen de blocage en rotation du module ;
- La figure 6 est une vue en perspective d'un module d'éclairage selon un troisième mode de réalisation, la figure 6 illustrant un deuxième exemple de moyen de blocage en rotation du module ;
- La figure 7 est une vue de côté d'un module d'éclairage et de son support selon un quatrième mode de réalisation de l'invention ;
- La figure 8 est une vue en perspective de la partie arrière d'un module d'éclairage selon un cinquième mode de réalisation, la figure 8 illustrant un premier exemple de moyens de préhension du module ;
- La figure 9 est une vue en perspective de la partie arrière d'un module d'éclairage selon un sixième mode de réalisation, la figure 9 illustrant un deuxième exemple de moyens de préhension du module ;
- La figure 10 est une vue en perspective de la partie arrière d'un module d'éclairage selon un septième mode de réalisation, la figure 10 illustrant un troisième exemple de moyens de préhension du module ;

Dans la description qui va suivre, une série d'exemples de réalisation de l'invention va être décrite. Pour des raisons de commodité et de clarté d'exposé, ces différents exemples ont trait à des modules d'éclairage, c'est-à-dire à des modules de projecteurs situés habituellement à l'avant des véhicules. Il est cependant entendu que l'invention et plus particulièrement les solutions techniques des exemples qui vont suivre s'appliquent également à des modules de signalisation, c'est-à-dire notamment à des modules pour des feux de signalisation situés habituellement à l'arrière des véhicules.

Dans la description qui va suivre, il sera fait référence à l'axe optique des modules d'éclairage. Dans ce contexte, l'utilisation des termes « avant » et « arrière » sont à comprendre en relation avec le sens d'éclairage des modules. Lorsque le module est disposé à l'avant du véhicule, l'expression « avant » sera en correspondance avec la direction d'avancement normale du véhicule, alors qu'elle sera opposée à cette direction lorsque le module est disposé à l'arrière du véhicule.

Bien que l'invention soit essentiellement orientée vers des applications dans le domaine des véhicules, elle n'en reste pas moins applicable au domaine de l'éclairage en général. Les dispositifs et modules d'éclairage et de signalisation peuvent alors être orientés autrement que dans les figures. Les termes relatifs tels que « avant », « arrière », etc. utilisés en relation avec les figures qui illustrent une orientation bien particulière des modules d'éclairage ne sont par conséquent pas à interpréter de manière limitative.

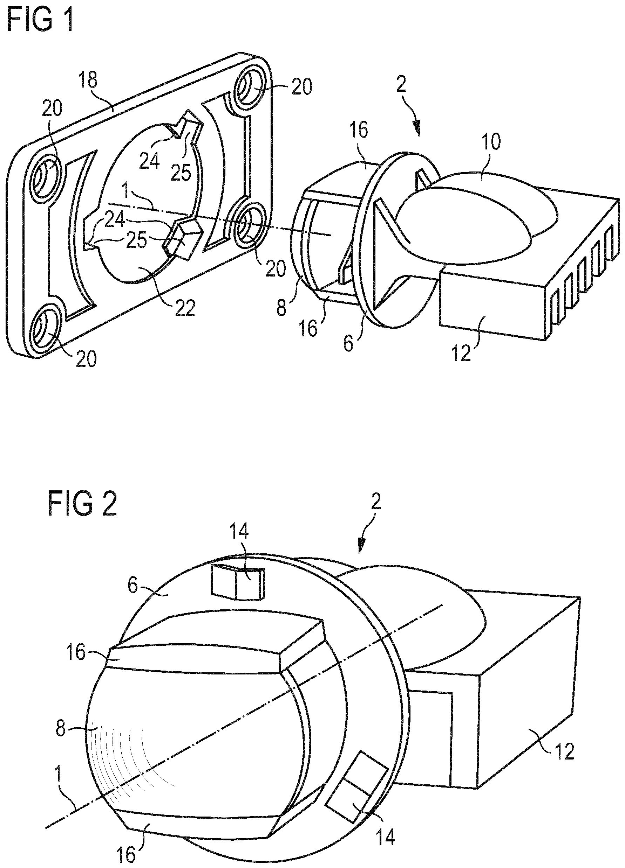

La figure 1 illustre un module d'éclairage pour véhicule, selon un premier mode de réalisation de l'invention. Il s'agit d'un module d'éclairage 2 et de son support 18. Le module est du type à réflecteur elliptique, à savoir que le module 2 comprend un réflecteur 10, précisément un double réflecteur, dont la surface réfléchissante présente un profil elliptique avec deux foyers. Un premier foyer est occupé par une source lumineuse du type LED (non visible) de manière à ce que les rayons lumineux émis par la source lumineuse au premier foyer soient réfléchis par la surface réfléchissante majoritairement vers le second foyer. Une lentille 8 est disposée à l'avant de réflecteur 10 de manière à ce que le foyer de la lentille corresponde au moins approximativement avec le second foyer de la surface réfléchissante. Ces différents éléments sont alignés le long de l'axe optique 1 du module qui peut également être assimilé à son axe longitudinal. Il est à noter qu'une surface réfléchissante peut être disposée dans le plan délimitant la surface réfléchissante du réflecteur 10, avec un bord avant au niveau du second foyer afin d'obtenir une coupure du faisceau d'éclairage comme cela est exigé par la réglementation pour la fonction d'éclairage dite « code » ou encore « de croisement ». Cette configuration est bien connue en soi de l'homme de métier et ne sera par conséquent pas d'avantage explicitée.

Le module d'éclairage 2 comprend également une bride de fixation 6 et des pattes 16 de fixation de la lentille à la bride 6. Il comprend également un radiateur 12 de refroidissement des sources lumineuses.

La partie avant du module, c'est-à-dire jusqu'à la bride 6, est destinée à traverser l'orifice 22 du support 18. Ce dernier est généralement plan dans le cas précis de la figure 1. Il est à noter qu'il pourrait prendre diverses formes autres que celle illustrée et également non plane. Le support comprend une série de trous 20 de fixation à un boîtier (non représenté) du projecteur (également non représenté). L'orifice est généralement circulaire et présente une surface de montage de la bride 6 généralement plane. Il en va de même pour la bride 6. Le profil de l'orifice 22 du support 18 comprend trois encoches ou évidements 25 répartis sur le pourtour. Le support peut également comprendre en face de chaque encoche une patte 24 formant une surface de glissement généralement parallèle à la surface de montage de la bride 6 sur le support 18.

Le module d'éclairage 2 illustré à la figure 2 comprend sur la face avant de la bride de montage 6 trois pattes 14 réparties sur le pourtour de la bride. Ces pattes 14 forment, chacune, une surface d'accrochage avec l'encoche correspondante 25 de l'ouverture 22 du support 18. Chacune des pattes 14 est orientée essentiellement selon la tangente au cercle formé par la bride. Les trois pattes 14 sont orientées dans le même sens à savoir qu'elles présentent toute leur ouverture dans un même sens horloger ou anti horloger. Ces trois pattes 14 constituent avec la bride 6, les encoches 25 et les pattes optionnelles 24 des moyens de fixation rapide du module sur le support 18. En effet, le montage du module d'éclairage 2 s'opère comme suit : on procède à un positionnement du module en face de l'orifice 22 du support 18, suivi d'un mouvement de translation du module selon une direction correspondant essentiellement à celle de l'axe optique du module de manière à ce que la partie avant du module, à savoir essentiellement la lentille 8, pénètre l'orifice 22 jusqu'à ce que la surface avant de la bride de montage 6 du module vienne en contact avec la surface correspondante du support 18. Lors de ce mouvement ou précédemment, on veillera à positionner angulairement le module de manière à mettre les pattes 14 en correspondance avec les encoches respectives 25 du support. Une fois la surface avant de la bride de montage 6 en contact avec la surface correspondante du support et les pattes 14 engagées avec les encoches correspondantes, le module peut ensuite être déplacé en rotation de quelques degrés dans le sens horloger (dans le cas précis des figures 1 et 2) afin de faire engager les pattes avec le support. Le module est ainsi fixé rapidement au support 18. Il peut être tout aussi facilement démonté notamment à des fins de remplacement ou de maintenance.

Il est bien sûr à noter que les pattes 14 et les encoches 25 peuvent ne pas être réparties de manière homogène sur la périphérie de l'orifice 22 de manière à assurer, en sus, une fonction de détrompeur. Dans ce cas, le module ne pourra être valablement fixé au support que dans une position angulaire prédéterminée. Le module présente en effet des caractéristiques au niveau du faisceau, qui font qu'il doit être positionné angulairement dans une position donnée.

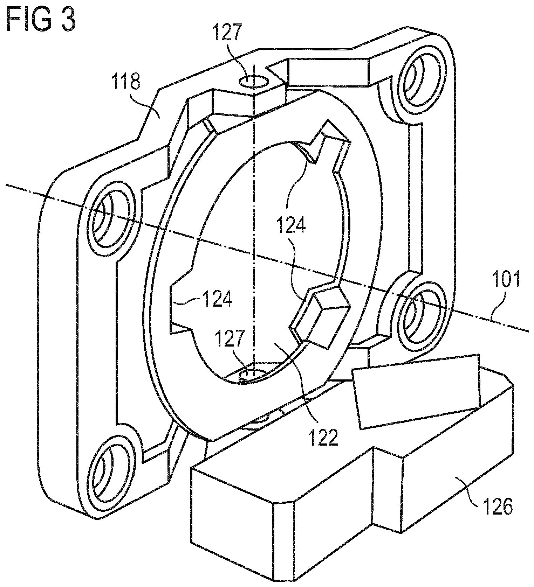

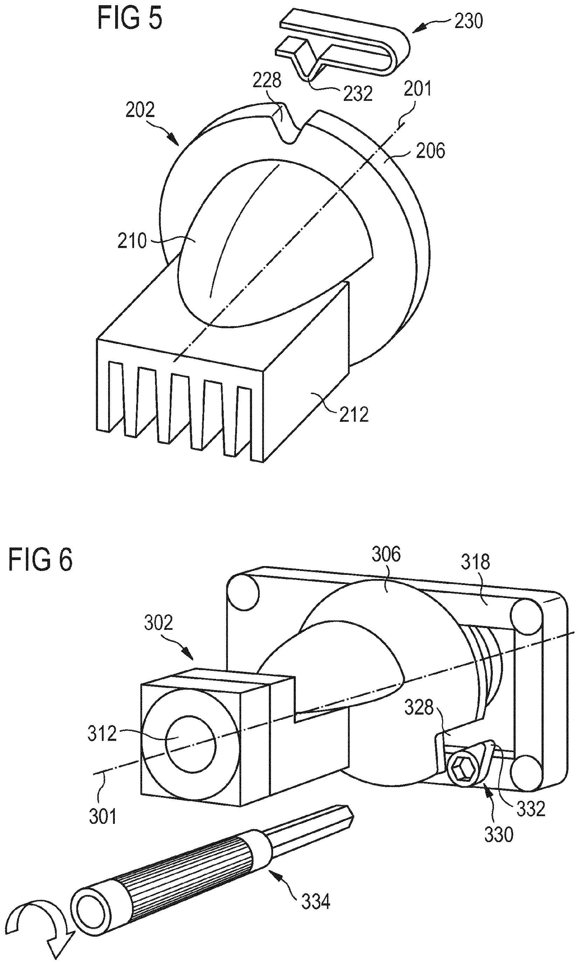

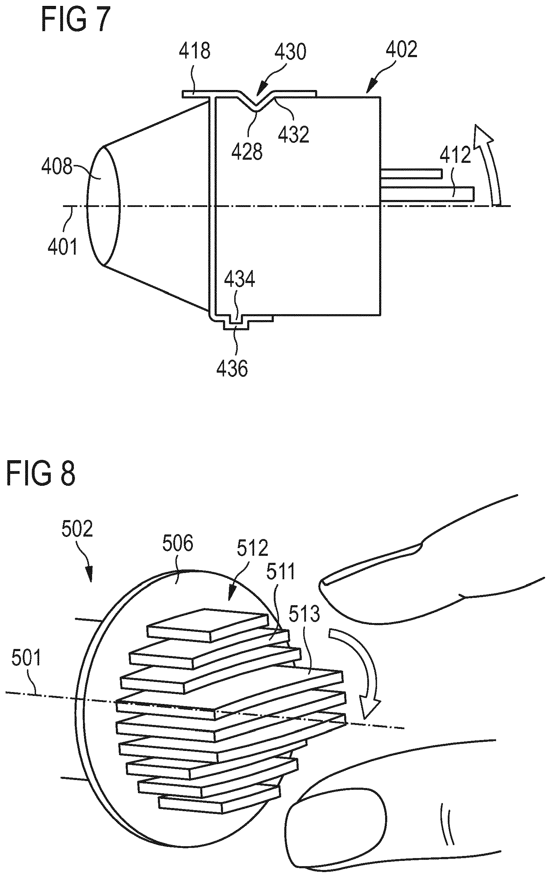

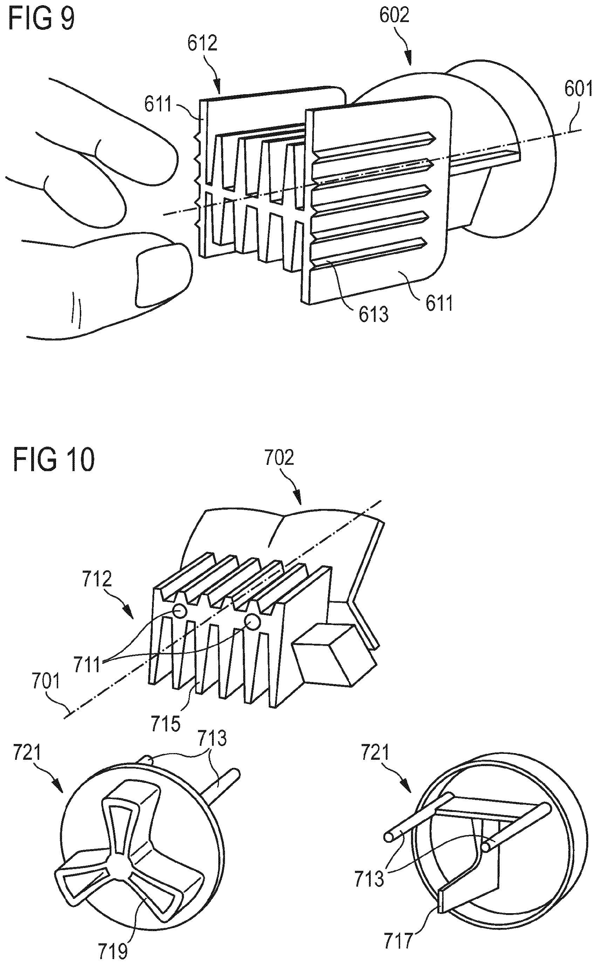

D'autres modes de réalisation de l'invention vont être décrits en relation avec les figures 3 et 5 à 10. De nombreux éléments constitutifs des modules et supports illustrés dans les figures 3 et 5 à 10 correspondent à ceux des figures 1 et 2. Une numérotation cohérente a été adoptée pour désigner ces différents éléments sachant que les signes de référence de la figure 3 correspondent à ceux des figures 1 et 2 à cette différence qu'ils sont majorés de 100. Il en va de même pour la figure 5 où ils sont majorés de 200, pour la figure 6 où ils sont majorés de 300, pour la figure 7 où ils sont majorés de 400, pour la figure 8 où ils sont majorés de 500, pour la figure 9 où ils sont majorés de 600 et pour la figure 10 où ils sont majorés de 700. Pour les éléments de ces figures n'ayant pas de correspondant aux figures 1 et 2, des signes de références spécifiques ont été utilisés.

La figure 3 illustre une variante du support 18 de la figure 1. En effet, le support 118 de la figure 3 est en principe équivalent à celui de la figure 1 à cette différence près qu'il est mobile en rotation selon un axe vertical afin d'assurer une fonction d'éclairage de virage dynamique (ou encore DBL pour « Directional Bending Light »). La construction du support 118 se distingue de celui de la figure 1 essentiellement en ce qu'il comprend des paliers supérieur et inférieur 127 destinés à coopérer avec des pivots du boîtier du projecteur. Seul le pivot inférieur est représenté. Il comprend un dispositif motorisé 126 destiné à assurer le pivotement du support 118 selon l'axe généralement vertical formé par les paliers et pivots qui viennent d'être décrits. Au vu de l'illustration de la figure 3, la liberté de pivotement du support 118 et la présence d'un dispositif de motorisation n'empêche pas le montage du module d'éclairage sur le support, tel que décrit en relation avec les figures 1 et 2.

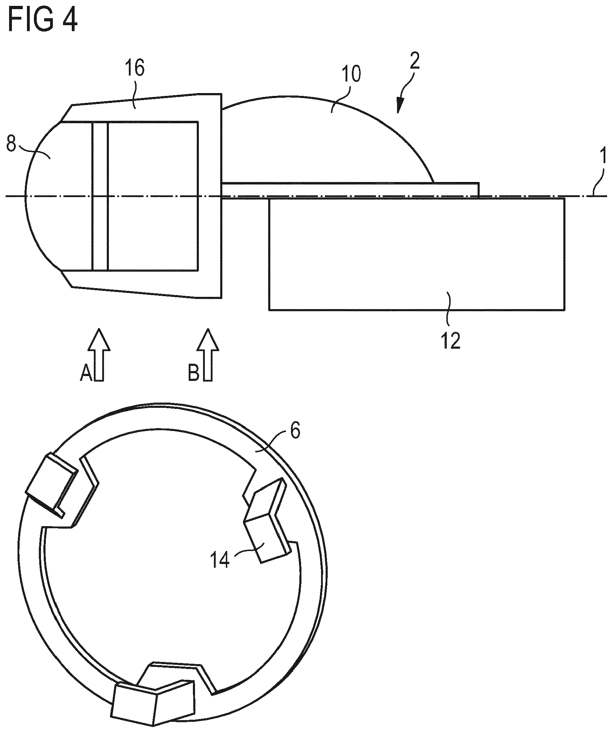

La figure 4 illustre les positionnements préférentiels pour les moyens de fixation rapide. Plus particulièrement, la figure comprend une vue d'une bride de fixation 6 correspondant à celle des figures 1 et 2 ainsi qu'une vue de côté du module d'éclairage 2 avec deux flèches A et B. Ces deux flèches sont des repères définissant la plage de positionnement préférentiel des moyens de fixation. La position A correspond essentiellement à la face arrière de la lentille 8 et la position B correspond essentiellement au second foyer (non visible) des surfaces réfléchissantes 10. Le positionnement des moyens de fixation au niveau B est intéressant dans la mesure où c'est celui où l'effet de vibration se fera le moins sentir au niveau du faisceau émis. La position A est également intéressante dans la mesure où elle permet la fixation du module via les pattes de fixation 16 de la lentille 8. Elle est également intéressante car elle permet de ne rendre que la lentille visible depuis l'extérieur du projecteur. Il est entendu que les moyens de fixation, et plus particulièrement la bride 6 illustrée à la figure 4, peuvent être agencés à toute position longitudinale comprise entre les repères A et B.

La figure 5 est une vue en perspective de la partie arrière d'un module d'éclairage 202 selon un deuxième mode de réalisation de l'invention. La bride de fixation 206, similaire à celle des figures 1, 2 et 4, comprend une encoche 228 à sa périphérie. Le support (non représenté) comprend un moyen de blocage 230 sous la forme d'une pointe 232 apte à coopérer avec l'encoche 228, et montée sur ressort. Dans le cas particulier de l'exemple de la figure 5, la fonction ressort est assurée par une lamelle en forme généralement de U, la pointe 232 étant portée par une extrémité de la lamelle. La pointe 232 permet de coopérer avec l'encoche correspondante 228 lorsque la bride de fixation 206 a atteint sa position angulaire finale. L'effort de résistance à une rotation inverse qui est ainsi exercé permet d'une part au monteur ou à l'utilisateur du véhicule occupé à remplacer le module, de pouvoir sentir l'engagement complet des moyens de fixation, et d'autre part, d'éviter toute désolidarisation intempestive. Il est à noter que des moyens de blocage ou du moins des moyens aptes à exercer un effort de résistance à la rotation inverse du module peuvent être prévus également au niveau des pattes (non visibles, correspondant aux pattes 14 de la figure 2) de la bride 206.

La figure 6 illustre une alternative aux moyens de blocage de la figure 5, cette alternative correspondant à un troisième exemple de réalisation de l'invention. Similairement au module de la figure 5, la bride de fixation 306 du module 302 de la figure 6 comprend également une encoche 328 à sa périphérie. Similairement à l'exemple de la figure 5, le support 318 comprend également une pointe 332 destinée à coopérer avec l'encoche 328. Le moyen de blocage 330 comprenant la pointe 332 est cependant ici rotatif par rapport au support 318. Son axe de rotation est généralement parallèle à l'axe optique ou longitudinal du module 302. Le moyen de blocage 330 présente en fait une forme de came montée rotative sur le support 318. Elle comprend un relief de tête de vis généralement centré sur l'axe de rotation de la came 330. Le relief est destiné à permettre un déplacement en rotation de la came 330 au moyen d'un outil 334 du type tournevis. La came 330 peut être montée libre en rotation sur son axe, avec préférentiellement un couple résistant destiné à assurer un maintien position. Elle peut également être montée avec des moyens élastiques du type ressort assurant une force de rappel vers une position, notamment une position d'engagement avec l'encoche 328. Dans ce cas, outre une rotation dans le sens de désengagement de la came 330 de l'encoche 328, un couple devra être exercé et maintenu via l'outil 334 lors de la rotation de démontage du module 302.

La figure 7 illustre un quatrième exemple de réalisation de l'invention. La fixation rapide du module 402 au support 418 n'est plus ici assurée par un mouvement de rotation mais bien par un mouvement de basculement. En effet, le module d'éclairage 402 ne comprend plus de bride mais bien une surface avant destinée à venir en contact avec une surface correspondante du support 418, et une surface extérieure à sa périphérie. La surface extérieure du module 402 comprend au moins un ergot 434 préférentiellement disposé à une partie inférieure. L'ergot 434 est généralement dirigé radialement vers le bas. Le support 418 comprend un support 436 avec un creux correspondant à l'ergot 434, de manière à pouvoir le recevoir et assurer une liaison à contact positif dans une direction généralement parallèle à l'axe optique du module dirigée vers l'arrière du module et également une direction perpendiculaire à l'axe optique et dirigée vers le bas. Le module 402 comprend à sa périphérie une encoche 428 destinée à coopérer avec une pointe 432 d'un moyen de fixation 430 du support 418. Ce moyen de fixation comprend des moyens élastiques supportant la pointe 432 de manière à permettre un déplacement de la pointe 432 lors de la mise en place du module 402 sur le support 418. Le mouvement de mise en place comprend une approche en translation où le module est en position inclinée au moment du contact avec le support 418. L'ergot ou les ergots 434 sont mis en correspondance avec le support 436 et le module 402 est ensuite basculé depuis sa position inclinée vers une position généralement horizontale de manière à ce que sa surface avant vienne en contact avec la surface arrière correspondante du support 418 et que la pointe 432 engage avec l'encoche 428 du module 402. Ce mouvement de basculement est illustré par la flèche à la figure 7.

Les figures 1 à 7 ont illustré différentes modes de réalisation pour les moyens de fixation rapide. Il est entendu que ces moyens peuvent prendre d'autres formes non divulguées.

La figure 8 est une vue en perspective de la partie arrière d'un module d'éclairage 502 selon un cinquième mode de réalisation de l'invention. Dans le cadre de ce mode de réalisation, on ne s'intéresse plus directement aux moyens de fixation rapide qui peuvent prendre notamment les diverses formes décrites ci-avant, mais bien à la préhension du module en vue de son montage et démontage. Le module d'éclairage 502 comprend un radiateur 512 à sa partie arrière, le radiateur étant destiné à évacuer les calories des sources lumineuses à LED et à assurer une préhension satisfaisante du module notamment en vue de sa fixation à un support via des moyens de fixation rapide. Le radiateur 512 comprend classiquement une série d'ailettes. Ces dernières sont cependant orientées vers l'arrière et de plus, un premier groupement d'ailettes adjacentes 513 présente une première hauteur donnée, et une deuxième groupement d'ailettes adjacentes disposées de part et d'autre du premier groupement présent une deuxième hauteur inférieure à la première hauteur de manière à permettre une préhension manuelle du premier groupement. Ce dernier est préférentiellement généralement centré par rapport à l'axe de rotation du module 502 pour son montage, dans le cas où les moyens de fixation rapide sont du type à rotation. La différence de hauteur entre les deux groupements d'ailettes est supérieure à 10 mm, préférentiellement 15 mm, plus préférentiellement encore 20 mm, de manière à permettre une manipulation aisée.

La figure 9 est une vue en perspective de la partie arrière d'un module d'éclairage 602 selon un sixième mode de réalisation de l'invention. Il s'agit d'un autre mode de réalisation des moyens de préhension du module en vue de son montage et démontage. Similairement à l'exemple précédent, à savoir celui de la figure 8, les moyens de préhension sont situés au niveau du radiateur 612 qui est disposé à l'arrière du module 602. Le radiateur comprend deux faces externes latérales 611. Ces faces sont préférentiellement généralement planes et parallèles. Elles peuvent de plus être pourvues de nervures 613 orientées parallèlement à l'axe optique ou longitudinal du module 602. De plus, ces deux faces 611 sont plus hautes que les ailettes du radiateur disposées entre ces deux faces 611. Cette mesure permet d'éviter tout contact avec les ailettes qui peuvent être sinon davantage chaudes et/ou coupantes que les faces latérales 611.

La figure 10 est une vue en perspective de la partie arrière d'un module d'éclairage 702 selon un septième mode de réalisation de l'invention. Il s'agit d'un autre mode de réalisation des moyens de préhension du module en vue de son montage et démontage. Dans ce cas, les moyens de préhension comprennent un outil destiné à être mis en prise avec la partie arrière du module 702. Plus particulièrement, le module comprend à sa partie arrière un radiateur 712 qui comprend au moins deux orifices 711 distants l'un de l'autre et orientés selon l'axe optique ou longitudinal du module 702. L'outil 721 comprend essentiellement une partie préhension 719 ergonomiquement adaptée à une préhension et manipulation manuelle, et une partie de liaison avec le module. Cette partie de liaison comprend au moins deux tiges 713 s'étendant l'une parallèle à l'autre depuis l'outil 721. Elles sont destinées à coopérer avec les orifices 711 en les pénétrant. L'outil 721 peut ainsi être lié en rotation avec le module 702. La partie de liaison de l'outil 721 peut par ailleurs comprendre un élément supplémentaire comme par exemple une nervure 717 destinée à coopérer avec l'interstice présent entre deux ailettes du refroidisseur 712. Il est bien entendu que les parties préhension et de liaison de l'outil peuvent prendre diverses formes autres que celles illustrées à la figure 10.

De manière générale, les différents modes de réalisation qui ont été décrits en relation avec les figures sont des exemples schématiques et non limitatifs de l'invention. Dans la pratique, des variations notamment au niveau de certains détails de réalisation pourront avoir lieu.

D'un point de vue des matériaux, les moyens de fixation rapide seront préférentiellement en matériau plastiques injectés. Ils peuvent cependant comprendre d'autres matériaux comme des matériaux métalliques, notamment sous forme d'insert. Les outils de montage et démontage du module peuvent également comprendre des matériaux plastiques ou encore une combinaison de matériaux métalliques et plastiques.

De manière générale, le boîtier du dispositif d'éclairage et/ou de signalisation pourra comprendre une trappe d'accès au module. Cette dernière sera préférentiellement disposée à l'arrière du boîtier, en face du module de manière à permettre son extraction par un mouvement de translation. D'autres emplacements sont cependant possibles, notamment en fonction de l'accessibilité et du volume du boîtier. La trappe pourra être formée par le contour d'une ligne d'affaiblissement ou de prédécoupe. L'ouverture du boîtier pourra se faire par détachement de la portion de paroi formée par ce contour. Cette portion de paroi pourra ensuite être remise en place notamment par collage. D'autres modes de réalisation de la trappe peuvent bien sûr être envisagés.

## Revendications

1. Module d'éclairage et/ou de signalisation (2 ; 102 ; 202 ; 302 ; 402 ; 502 ; 602 ; 702) notamment pour véhicule, comprenant :
au moins une source lumineuse apte à émettre des rayons lumineux ;
au moins une surface réfléchissante (10 ; 110 ; 210 ; 310) apte à réfléchir les rayons lumineux émis par la source lumineuse en un faisceau d'éclairage et/ou de signalisation suivant un axe optique (1 ; 101 ; 201 ; 301 ; 401 ; 501 ; 601 ; 701) du module ;
le module comprenant en outre,
- des moyens de fixation rapide (6, 14 ; 206 ; 306 ; 418, 430, 434, 436 ; 506) du module à un support (18 ; 118 ; 318),
- des moyens de préhension (412 ; 513 ; 611 ; 721) disposés à l'extrémité arrière du module (402 ; 502 ; 602 ; 702), préférentiellement sur un radiateur de refroidissement (412 ; 512 ; 612 ; 712) de la ou d'au moins une des sources lumineuses, lesdits moyens étant parmi les suivants : une face arrière présentant dans une coupe longitudinale un profil avec une partie en saillie (513) adaptée à une préhension manuelle, une face arrière présentant des faces latérales (611) généralement parallèles adaptées à une préhension manuelle, une face arrière présentant au moins deux orifice(s) (711) et/ou encoche(s) (715) aptes à recevoir des tiges (713, 717) d'un outil de préhension (721) distinct du module, le module étant **caractérisé en ce que** la ou au moins une des surfaces réfléchissantes (10 ; 110 ; 210 ; 310) est de profil elliptique avec un premier foyer occupé par la source ou au moins une des sources lumineuse et un second foyer, **en ce qu'**il comprend une lentille de projection (8 ; 408) du faisceau d'éclairage, disposée à l'extrémité avant du module, les moyens de fixation rapide (6, 14 ; 206 ; 306 ; 418, 430, 434, 436) étant positionnés longitudinalement selon l'axe optique (1 ; 401) du module entre le second foyer et ladite lentille.

2. Module selon la revendication 1, **caractérisé en ce que** les moyens de fixation rapide (6, 14; 206; 306; 418, 430, 434, 436; 506) sont disposés à la périphérie du module (2 ; 102 ; 202 ; 302 ; 402 ; 502 ; 602 ; 702).

3. Module selon l'une des revendications 1 et 2, **caractérisé en ce que** les moyens de fixation sont positionnés selon l'axe optique (1 ; 101 ; 201 ; 301 ; 401 ; 501 ; 601 ; 701) du module (2 ; 102 ; 202 ; 302 ; 402 ; 502 ; 602 ; 702) entre les deux extrémités longitudinales dudit module.

4. Module selon l'une des revendications 1 à 3, **caractérisé en ce que** les moyens de fixation (6, 14 ; 206 ; 306 ; 418, 430, 434, 436 ; 506) sont configurés de manière à permettre la mise en place du module (2 ; 102 ; 202 ; 302 ; 402 ; 502 ; 602 ; 702) par un déplacement selon une direction correspondant essentiellement à celle de l'axe optique (1 ; 101 ; 201 ; 301 ; 401 ; 501 ; 601 ; 701) du module.

5. Module selon la revendication 4, **caractérisé en ce que** le déplacement de mise en place du module (402) comprend un mouvement de basculement par rapport à une direction transversale, le mouvement de basculement ayant lieu préférentiellement après le mouvement de translation.

6. Module selon l'une des revendications 1 à 5, **caractérisé en ce que** les moyens de fixation rapide (6, 14 ; 206 ; 306 ; 506) sont du type à rotation autour d'un axe parallèle à ou confondu avec l'axe optique (1 ; 101 ; 201 ; 301 ; 501 ; 601 ; 701) du module, préférentiellement à baïonnette, et
les moyens de fixation rapide comprenant préférentiellement une bride de montage (6 ; 206 ; 306 ; 506).

7. Module selon la revendication 6, **caractérisé en ce que** les moyens de fixation rapide comprennent des moyens de blocage en rotation (228, 230, 232 ; 328, 330, 332) configurés pour empêcher une désolidarisation du module (202 ; 302), les moyens de blocage comprenant préférentiellement une encoche (228 ; 328) à la périphérie de la bride (206 ; 306).

8. Dispositif d'éclairage et/ou de signalisation notamment pour véhicule, comprenant un module d'éclairage et/ou de signalisation et un support dudit module, **caractérisé en ce que** le module est conforme à l'une des revendications 1 à 7.

9. Dispositif selon la revendication 8, **caractérisé en ce que** le support (18 ; 118 ; 218 ; 318 ; 418) comprend des moyens de fixation rapide (24, 25 ; 430, 436) destinés à coopérer avec des moyens de fixation rapide correspondants (6, 14 ; 428, 434) dudit module (2 ; 402).

10. Dispositif selon la revendication 9, **caractérisé en ce que** le support comprend un orifice (22) destiné à recevoir le module (2 ; 102 ; 202 ; 302 ; 402) et une surface de montage du module.

11. Dispositif selon la revendication 9, **caractérisé en ce que** le support comprend à la périphérie de l'orifice des moyens de blocage en rotation (230, 232 ; 330, 332) du module, les dits moyens étant aptes à coopérer avec une encoche (228 ; 328) à la périphérie des moyens de fixation (206 ; 306) du module (202 ; 302).

12. Dispositif selon la revendication 11, **caractérisé en ce que** les moyens de blocage comprennent un élément (232) mobile radialement par rapport à l'orifice et/ou un élément (332) mobile en rotation configuré de manière à agir à la manière d'un cliquet.

## Patentansprüche

1. Beleuchtungs- und/oder Signalisierungsmodul (2; 102; 202; 302; 402; 502; 602; 702) insbesondere für ein Fahrzeug, das Folgendes beinhaltet:
mindestens eine Lichtquelle, die dazu fähig ist, Lichtstrahlen zu emittieren;
mindestens eine reflektierende Oberfläche (10; 110; 210; 310), die dazu fähig ist, die von der Lichtquelle emittierten Lichtstrahlen als ein Beleuchtungs- und/oder Signalisierungsbündel entlang einer optischen Achse (1; 101; 201; 301; 401; 501; 601; 701) des Moduls zu reflektieren;
wobei das Modul ferner Folgendes beinhaltet:
- Mittel zur schnellen Befestigung (6, 14; 206; 306; 418, 430, 434, 436; 506) des Moduls an einer Halterung (18; 118; 318),
- Greifmittel (412; 513; 611; 721), die an dem hinteren Ende des Moduls (402; 502; 602; 702), vorzugsweise an einem Kühlkörper (412; 512; 612; 712) der oder mindestens einer der Lichtquellen, angeordnet sind, wobei die Mittel eines von Folgendem sind: eine hintere Fläche, die im Längsschnitt ein Profil mit einem vorspringenden Abschnitt (513) aufweist, der für ein manuelles Greifen angepasst ist, eine hintere Fläche, die im Allgemeinen parallele Seitenflächen (611) aufweist, die für ein manuelles Greifen angepasst sind, eine hintere Fläche, die mindestens zwei Öffnungen (711) und/oder Auskerbungen (715) aufweist, die dazu fähig sind, Stangen (713, 717) eines Greifwerkzeugs (721), das von dem Modul getrennt ist, aufzunehmen,
wobei das Modul **dadurch gekennzeichnet ist, dass** die oder mindestens eine der reflektierenden Oberflächen (10; 110; 210; 310) ein elliptisches Profil mit einem ersten Brennpunkt, der von der Lichtquelle oder mindestens einer der Lichtquellen besetzt ist, und einem zweiten Brennpunkt aufweist und dass es eine Linse zur Projektion (8; 408) des Beleuchtungsbündels beinhaltet, die am vorderen Ende des Moduls angeordnet ist,
wobei die Mittel zur schnellen Befestigung (6, 14; 206; 306; 418, 430, 434, 436) gemäß der optischen Achse (1; 401) des Moduls in Längsrichtung zwischen dem zweiten Brennpunkt und der Linse positioniert sind.

2. Modul nach Anspruch 1, **dadurch gekennzeichnet, dass** die Mittel zur schnellen Befestigung (6, 14; 206; 306; 418, 430, 434, 436; 506) am Umfang des Moduls (2; 102; 202; 302; 402; 502; 602; 702) angeordnet sind.

3. Modul nach einem der Ansprüche 1 und 2, **dadurch gekennzeichnet, dass** die Befestigungsmittel gemäß der optischen Achse (1; 101; 201; 301; 401; 501; 601; 701) des Moduls (2; 102; 202; 302; 402; 502; 602; 702) zwischen den beiden Längsenden des Moduls angeordnet sind.

4. Modul nach einem der Ansprüche 1 bis 3, **dadurch gekennzeichnet, dass** die Befestigungsmittel (6, 14; 206; 306; 418, 430, 434, 436; 506) so konfiguriert sind, dass sie ein Einsetzen des Moduls (2; 102; 202; 302; 402; 502; 602; 702) durch eine Bewegung gemäß einer Richtung, die im Wesentlichen der der optischen Achse (1; 101; 201; 301; 401; 501; 601; 701) des Moduls entspricht, ermöglichen.

5. Modul nach Anspruch 4, **dadurch gekennzeichnet, dass** die Bewegung zum Einsetzen des Moduls (402) eine Kippbewegung mit Bezug auf eine Querrichtung beinhaltet, wobei die Kippbewegung vorzugsweise nach der Translationsbewegung erfolgt.

6. Modul nach einem der Ansprüche 1 bis 5, **dadurch gekennzeichnet, dass** die Mittel zur schnellen Befestigung (6, 14; 206; 306; 506) vom Typ Drehung um eine zu der optischen Achse (1; 101; 201; 301; 501; 601; 701) des Moduls parallele Achse oder eine mit dieser zusammenfallende Achse sind, vorzugsweise vom Typ Bajonett, und
wobei die Mittel zur schnellen Befestigung vorzugsweise einen Montageflansch (6; 206; 306; 506) beinhalten.

7. Modul nach Anspruch 6, **dadurch gekennzeichnet, dass** die Mittel zur schnellen Befestigung Drehsicherungsmittel (228, 230, 232; 328, 330, 332) beinhalten, die dazu konfiguriert sind, ein Lösen des Moduls (202; 302) zu verhindern, wobei die Sicherungsmittel vorzugsweise eine Auskerbung (228; 328) am Umfang des Flansches (206; 306) beinhalten.

8. Beleuchtungs- und/oder Signalisierungsvorrichtung insbesondere für ein Fahrzeug, beinhaltend ein Beleuchtungs- und/oder Signalisierungsmodul und eine Halterung des Moduls, **dadurch gekennzeichnet, dass** das Modul einem der Ansprüche 1 bis 7 entspricht.

9. Vorrichtung nach Anspruch 8, **dadurch gekennzeichnet, dass** die Halterung (18; 118; 218; 318; 418) Mittel zur schnellen Befestigung (24, 25; 430, 436) beinhaltet, die dazu bestimmt sind, mit entsprechenden Mitteln zur schnellen Befestigung (6, 14; 428, 434) des Moduls (2; 402) zusammenzuwirken.

10. Vorrichtung nach Anspruch 9, **dadurch gekennzeichnet, dass** die Halterung eine Öffnung (22) beinhaltet, die dazu bestimmt ist, das Modul (2; 102; 202; 302; 402) und eine Montageoberfläche des Moduls aufzunehmen.

11. Vorrichtung nach Anspruch 9, **dadurch gekennzeichnet, dass** die Halterung am Umfang der Öffnung Drehsicherungsmittel (230, 232; 330, 332) für das Modul beinhaltet, wobei die Mittel dazu fähig sind, mit einer Auskerbung (228; 328) am Umfang der Befestigungsmittel (206; 306) des Moduls (202; 302) zusammenzuwirken.

12. Vorrichtung nach Anspruch 11, **dadurch gekennzeichnet, dass** die Sicherungsmittel ein Element (232), das mit Bezug auf die Öffnung radial beweglich ist, und/oder ein Element (332), das drehbeweglich ist und dazu konfiguriert ist, als Klinke zu wirken, beinhalten.

## Claims

1. Lighting and/or signaling module (2; 102; 202; 302; 402; 502; 602; 702), for a vehicle, comprising:
at least one light source able to emit rays of light;
at least one reflective surface (10; 110; 210; 310) able to reflect the rays of light emitted by the light source as a lighting and/or signaling beam along an optical axis (1; 101; 201; 301; 401; 501; 601; 701) of the module;
said module further comprising
- quick-fastening means (6, 14; 206; 306; 418, 430, 434, 436; 506) for fastening the module to a mount (18; 118; 318),
- holding means (412; 513; 611; 721) arranged at the rear end of the module (402; 502; 602; 702), preferably on a cooling radiator (412; 512; 612; 712) for cooling the or at least one of the light sources, said means being one of the following: a rear face which, in a longitudinal cross section, has a profile with a projecting part (513) suited to holding in the hand, a rear face that has generally parallel lateral faces (611) suited to holding in the hand, a rear face that has at least two orifice(s) (711) and/or notch(es) (715) suited to accepting rods (713, 717) of a holding tool (721) separate from the module,
the module being **characterized in that** the or at least one of the reflective surfaces (10; 110; 210; 310) is of elliptical profile having a first focal point occupied by the light source or at least one of the light sources and a second focal point, and **in that** it comprises a projection lens (8; 408) for projecting the lighting beam, positioned at the front of the module, the quick-fastening means (6, 14; 206; 306; 418, 430, 434, 436) being positioned longitudinally along the optical axis (1; 401) of the module between the second focal point and said lens.

2. Module according to claim 1, **characterized in that** the quick-fastening means (6, 14; 206; 306; 418, 430, 434, 436; 506) are arranged at the periphery of the module (2, 102; 202; 302; 402; 502; 602; 702).

3. Module according to one of claims 1 and 2, **characterized in that** the fastening means are positioned along the optical axis (1; 101; 201; 301; 401; 501; 601; 701) of the module (2; 102; 202; 302; 402; 502; 602; 702) between the two longitudinal ends of said module.

4. Module according to one of claims 1 to 3, **characterized in that** the fastening means (6, 14; 206; 306; 418, 430, 434, 436; 506) are configured in such a way as to allow the module (2; 102; 202; 302; 402; 502; 602; 702) to be fitted using a movement in a direction corresponding essentially to that of the optical axis (1; 101; 201; 301; 401; 501; 601; 701) of the module.

5. Module according to claim 4, **characterized in that** the movement involved in fitting the module (402) is a movement of tilting with respect to a transverse direction, the tilting movement preferably taking place after the translational movement.

6. Module according to one of claims 1 to 5, **characterized in that** the quick-fastening means (6, 14; 206; 306; 506) are of the type involving rotation about an axis parallel to or coincident with the optical axis (1; 101; 201; 301; 501; 601; 701) of the module, preferably of the bayonet type, and
the quick-fastening means preferably comprise a mounting flange (6; 206; 306; 506).

7. Module according to claim 6, **characterized in that** the quick-fastening means comprise rotation-proofing means (228, 230, 232; 328, 330, 332) configured to prevent the module (202; 302) from becoming detached, the rotation-proofing means preferably comprising a notch (228; 328) at the periphery of the flange (206; 306).

8. Lighting and/or signaling device for a vehicle, comprising a lighting and/or signaling module and a mount for said module, **characterized in that** the module is in accordance with one of claims 1 to 7.

9. Device according to claim 8, **characterized in that** the mount (18; 118; 218; 318; 418) comprises quick-fastening means (24; 25; 430, 436) intended to collaborate with corresponding quick-fastening means (6, 14; 428, 434) of said module (2; 402).

10. Device according to claim 9, **characterized in that** the mount comprises an orifice (22) intended to accept the module (2; 102; 202; 302; 402) and a surface for fitting of the module.

11. Device according to claim 9, **characterized in that** the mount comprises, at the periphery of the orifice, rotation-proofing means (230, 232; 330, 332) that prevent the module from rotating, said means being able to collaborate with a notch (228; 328) at the periphery of the fastening means (206; 306) of the module (202; 302).

12. Device according to claim 11, **characterized in that** the rotation-proofing means comprise an element (232) able to move radially with respect to the orifice and/or an element (332) able to move in terms of rotation and configured to act like a pawl.
